# EUROPÄISCHE PATENTANMELDUNG

(11) **EP 2 680 604 A2**
(43) Veröffentlichungstag der Anmeldung: **01.01.2014**
(21) Anmeldenummer: 13169445.7
(22) Anmeldetag: 28.05.2013
(51) Int. Cl.: H04Q 9/00

(54) **Vorrichtung und Verfahren zur Fahrzeugvermessung**

(30) Priorität: 28.06.2012 DE 102012211123
(71) Anmelder: ROBERT BOSCH GMBH, 70442 Stuttgart (DE)
(72) Erfinder: Kolbinger, Karl, 84494 Niedertaufkirchen (DE)

(57) **Zusammenfassung**

Ein Messwertaufnehmer (6) zur Vermessung eines Fahrzeugs (2) mit wenigstens einem Rad (4) ist dadurch gekennzeichnet, dass der Messwertaufnehmer (6) ausgebildet ist, im Betrieb wenigstens zwei verschiedene Daten-Erfassungseinrichtungen (8, 22), die ausgebildet sind, unterschiedliche Parameter eines einem Messwertaufnehmer (6) zugeordneten Rades (4) aufzunehmen bzw. zu messen und daraus Rohdaten zu erzeugen, anzusteuern und Rohdaten von den Daten-Erfassungseinrichtungen (8, 22) zu empfangen, aus den von wenigstens zwei Daten-Erfassungseinrichtungen empfangenen Rohdaten Ausgangsdaten zu berechnen und die Ausgangsdaten an einen übergeordneten Zentralrechner (10) auszugeben.

## Beschreibung

Die Erfindung betrifft eine Vorrichtung und ein Verfahren zur computergesteuerten Fahrzeugvermessung.

### Stand der Technik

Im Stand der Technik, siehe z. B. US 2006 0184296 A1, US 0200 700 96012 A1, US 2069660 B2 und WO 2000/005104 A1, sind Vorrichtungen und Verfahren zur Fahrzeugvermessung bekannt, bei denen Kameras und/oder Sensoren direkt oder über Protokollumsetzer bzw. Interfaceboards mit einem Anzeigecomputer verbunden sind.

Es ist eine Aufgabe der Erfindung, derartige Vorrichtungen und Verfahren zu verbessern.

### Offenbarung der Erfindung

Die Erfindung umfasst einen Messwertaufnehmer zur Verwendung in einem System zur Vermessung eines Fahrzeugs, das wenigstens ein Rad hat, wobei der Messwertaufnehmer ausgebildet ist, im Betrieb wenigstens zwei verschiedene Daten-Erfassungseinrichtungen, die ausgebildet sind, unterschiedliche Parameter eines dem jeweiligen Messwertaufnehmer zugeordneten Rades aufzunehmen bzw. zu messen und daraus Rohdaten zu erzeugen, anzusteuern und von den Daten-Erfassungseinrichtungen erzeugte Rohdaten zu empfangen, aus dem von wenigstens zwei Daten-Erfassungseinrichtungen empfangenen Rohdaten Ausgangsdaten zu berechnen und die Ausgangsdaten an einen übergeordneten Zentralrechner auszugeben.

Das Berechnen der Ausgangsdaten kann insbesondere das Kombinieren der Rohdaten, die von den wenigstens zwei Daten-Erfassungseinrichtungen bereit gestellt werden, umfassen.

Die Erfindung umfasst auch ein System zur Fahrzeugvermessung mit einem derartigen Messwertaufnehmer, wenigstens einer Daten-Erfassungseinrichtung, die ausgebildet ist, Parameter eines dem jeweiligen Messwertaufnehmer zugeordneten Rades aufzunehmen bzw. zu messen und daraus Rohdaten zu erzeugen, und einem Zentralrechner, der zur Auswertung der Ausgangsdaten des wenigstens einen Messwertaufnehmers und zur Ausgabe der Messergebnisse ausgebildet ist.

Die Erfindung umfasst auch ein Verfahren zur Vermessung eines Fahrzeugs mit wenigstens einem Rad, wobei das Verfahren die Schritte aufweist: Ansteuern von wenigstens zwei verschiedenen Daten-Erfassungseinrichtungen, die ausgebildet sind, unterschiedliche Parameter eines einem Messwertaufnehmer zugeordneten Rades aufzunehmen bzw. zu messen und daraus Rohdaten zu erzeugen, mit dem Messwertaufnehmer; Erfassen bzw. Messen von Parametern wenigstens eines Rades des zu vermessenden Fahrzeugs mit den wenigstens zwei Daten-Erfassungseinrichtungen; Erzeugen von Rohdaten aus den gemessenen Parametern; Sammeln und Verarbeiten der von den Daten-Erfassungseinrichtungen zur Verfügung gestellten Rohdaten des wenigstens einen Rades in dem dem jeweiligen Rad zugeordneten Messwertaufnehmer und Übertragen der verarbeiteten Daten an einen übergeordneten Zentralrechner, der zur Weiterverarbeitung der Daten und/oder Ausgabe des Ergebnisses ausgebildet ist. Dabei umfasst das Berechnen der Ausgangsdaten insbesondere das Kombinieren der Rohdaten, die von den wenigstens zwei Daten-Erfassungseinrichtungen zur Verfügung gestellt werden.

In einem erfindungsgemäßen Messwertaufnehmer sind alle Schnittstellen zur Verbindung mit den Daten-Erfassungseinrichtungen und die Ablaufsteuerung zur Vermessung eines Rades integriert. Der Messwertaufnehmer weist einen lokalen Speicher, z. B. ein DDR-RAM, auf, um die Daten eines Rades zu sammeln und zu speichern. Der Messwertaufnehmer verarbeitet die von den Daten-Erfassungseinrichtungen empfangenen Rohdaten und überträgt die Ergebnisse an den Zentralrechner, der die Daten aller Messwertaufnehmer und damit die Daten aller Räder des Fahrzeugs sammelt.

Der Messwertaufnehmer steuert zur Datenaufnahme mit dem Messwertaufnehmer verbundene Daten-Erfassungseinrichtungen und Aktuatoren, wie z. B. Sensoren und/oder Kameras, Beleuchtungseinheiten, Status-Anzeigen, ggf. eine elektronische Drehplatte zum Einstellen und/oder Erfassen des Einschlagwinkels des zu vermessenden Rades und Messeinrichtungen, die zur Bestimmung der Lage des Messwertaufnehmers in Bezug auf andere Messwertaufnehmer, das Gravitationsfeld der Erde oder eine Arbeitsbühne vorgesehen sind.

Die von dem Messwertaufnehmer aus den empfangenen Rohdaten erzeugten Ausgangsdaten werden über eine Datenleitung, die insbesondere als Leitung zur seriellen Datenübertragung ausgebildet sein kann, an den Zentralrechner weitergegeben. Zusätzlich können weitere Schnittstellen für Aktuatoren des Messplatzes, wie z. B. Aktuatoren für eine automatisierte Bewegung einer Hebebühne und/oder von Fahrzeugkomponenten während der Messung, und Schnittstellen für weitere Auswerte- und Recheneinheiten in dem Messwertaufnehmer vorgesehen sein.

Die Verwendung erfindungsgemäßer Messwertaufnehmer reduziert die im Zentralrechner anfallende Datenmenge und die zu ihrer Verarbeitung notwendige Rechenleistung und beschleunigt die Reaktion des Zentralrechners auf Benutzereingaben. Aufgrund der auf diese Weise reduzierten Anforderungen an den Zentralrechner kann ein kostengünstiger handelsüblicher Personal Computer als Zentralrechner verwendet werden. Alternativ können als Zentralrechner auch einfache Bediengeräte, wie z. B. Smartphones oder Tablet-PCs, verwendet werden.

Durch das Verarbeiten der Rohdaten im Messwertaufnehmer und das Übertragen der verarbeiteten Daten anstelle der Rohdaten wird die an den als Zentralrechner übertragende Datenmenge reduziert und somit vereinfacht, insbesondere kann auf eine aufwändige Hochleistungsverkabelung, wie sie für hohe Datenraten erforderlich ist, verzichtet werden. Die zulässige Kabellänge wird deutlich verlängert und es kann bei Bedarf auch eine drahtlose Datenübertragung zum Einsatz kommen.

Auch kann die Anzahl der Messwertaufnehmer erhöht werden, ohne den Zentralrechner zu überfordern.

Dadurch, dass die Anschlüsse bzw. Schnittstellen für alle Daten-Erfassungseinrichtungen eines Rades in einem einzigen Messwertaufnehmer, der bspw. als "Field Programmable Gate Array" (FPGA)-Platine ausgebildet ist, gebündelt werden, kann der Entwicklungsaufwand reduziert werden. Bei Bedarf können auch zwei oder mehr FPGA-Platinen in jedem Messwertaufnehmer vorgesehen sein. Eine Zwischenspeicherung der Sensordaten im Messwertaufnehmer ermöglicht auch bei Verwendung eines kostengünstigen Standard-Betriebssystems eine Quasi-Echtzeit-Übertragung der Daten in den Speicher des Messwertaufnehmers.

Als Recheneinheit im Messwertaufnehmer kann jede handelsübliche Hauptplatine (Mainboard) eines Personal Computers mit einer PCIe-Schnittstelle oder einer ähnlichen Schnittstelle verwendet werden. Die bereitgestellte Rechenleistung kann so bei geringen Kosten dem Bedarf angepasst werden.

Die Daten-Erfassungseinrichtungen können Kameras und/oder andere Bildsensoren umfassen, so dass die Rohdaten insbesondere Bilddaten enthalten. In diesem Fall ist der Messwertaufnehmer beispielsweise so ausgebildet, dass er die Bilddaten mit einer Frequenz von bis zu 25 Bildern pro Sekunde verarbeiten kann.

Die Erfindung wird im Folgenden anhand der beigefügten Zeichnungen näher erläutert.
Figur 1 zeigt eine schematische Ansicht eines Ausführungsbeispiels eines erfindungsgemäßen Messplatzes zur Vermessung eines Fahrzeugs.
Figur 2 zeigt eine schematische Ansicht eines Zentralrechners, der über Datenleitungen mit vier Messwertaufnehmern verbunden ist.
Figur 3 zeigt eine schematische Ansicht des funktionalen Aufbaus eines erfindungsgemäßen Messwertaufnehmers.

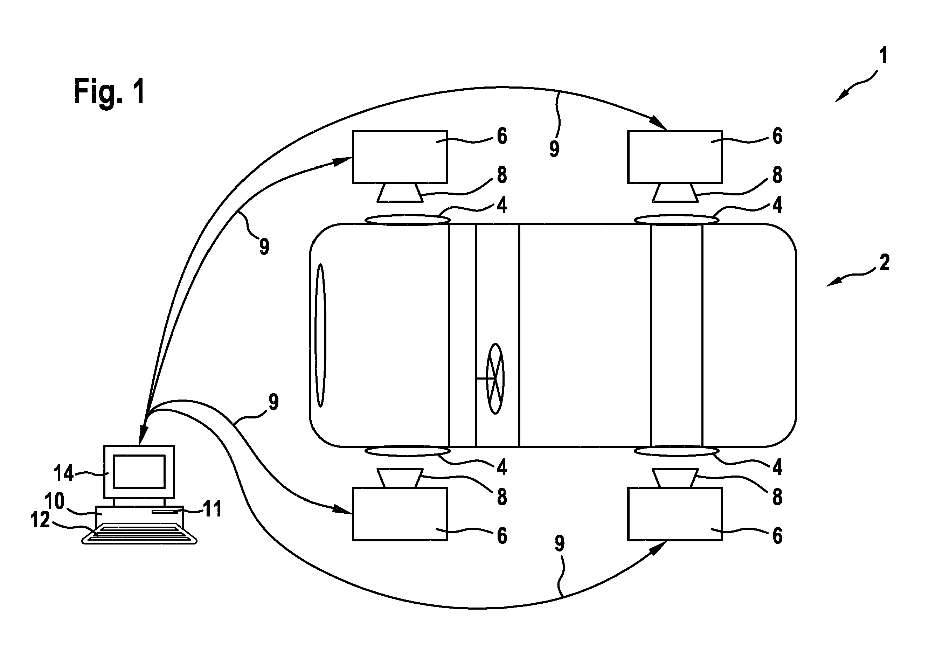

Figur 1 zeigt eine schematische Ansicht eines Ausführungsbeispiels eines erfindungsgemäßen Messplatzes 1 zur Vermessung eines Fahrzeugs 2.

Das auf dem Messplatz 1 angeordnete Fahrzeug 2 weist vier Räder 4 auf. An jedem Rad 4 des Fahrzeugs 2 ist ein Messwertaufnehmer 6 mit einer in diesem Beispiel als Kamera ausgebildeten Daten-Erfassungseinrichtung 8 derart angeordnet, dass die Kamera 8 auf das zugehörige Rad 4 des Fahrzeugs 2 gerichtet ist, um Bilder des jeweiligen Rades 4 aufzunehmen.

Die Messwertaufnehmer 6 sind jeweils über ein elektrisches serielles oder paralleles Datenkabel 9 mit einem Zentralrechner 10 verbunden. Alternativ kann die Datenübertragung von den Messwertaufnehmern 6 an den Zentralrechner 10 auch drahtlos, z. B. über eine WLAN-Verbindung oder eine Bluetooth-Verbindung ausgebildet sein.

Der Zentralrechner 10 weist eine Eingabevorrichtung 12, z. B. eine Tastatur, zur Eingabe von Daten und eine Anzeigevorrichtung 14, z. B. einen Monitor oder ein LCD-Display, zur Anzeige der Eingabe- und Messdaten auf. Der Zentralrechner 10 kann bei Bedarf auch weitere Schnittstellen, wie z. B. einen USB-Anschluss, ein Diskettenlaufwerk 11 und/oder Ähnliches aufweisen, um einen Datenaustausch mit der Umgebung zu ermöglichen.

Für den Fachmann ist offensichtlich, dass das System auch mit nur einem oder zwei Messwertaufnehmern 6 betrieben werden kann. In diesem Fall werden die Räder 4 des Fahrzeugs 2 nicht gleichzeitig sondern nacheinander vermessen.

Das System kann auch zusätzliche Messwertaufnehmer 6 aufweisen, die weiteren Rädern 4 eines drei- oder mehrachsigen Fahrzeugs 2 zugeordnet sind, so dass auch Fahrzeuge 2 mit drei und mehr Achsen in einem einzigen Messvorgang vollständig vermessen werden können.

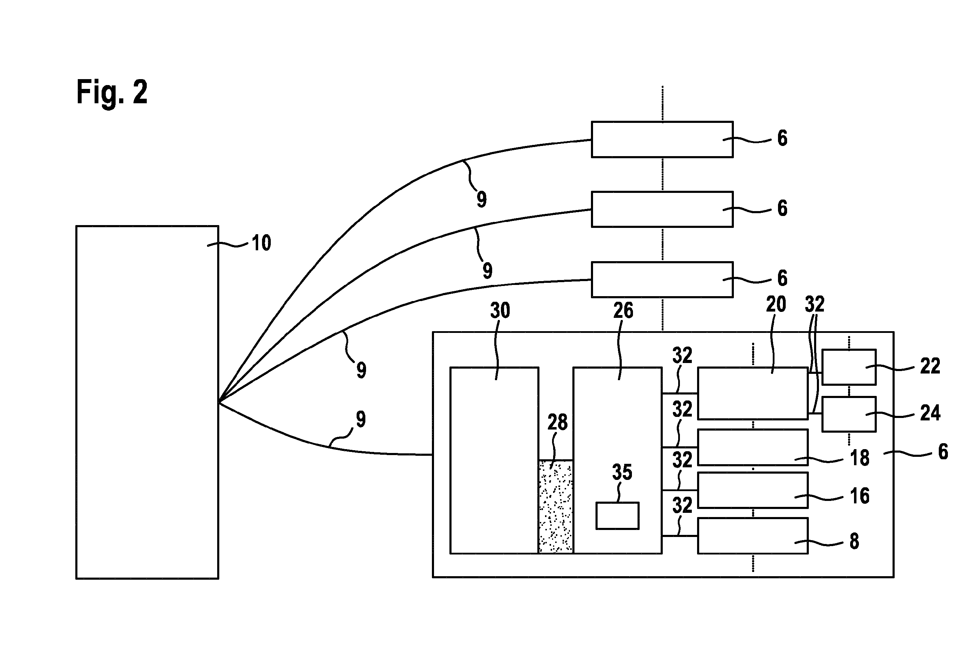

Figur 2 zeigt eine schematische Ansicht eines Zentralrechners 10, der über vier Datenleitungen 9 mit vier Messwertaufnehmern 6 verbunden ist. Einer der Messwertaufnehmer 6 ist im Detail gezeigt. Die weiteren Messwertaufnehmer 6 sind entsprechend aufgebaut.

Der Messwertaufnehmer 6 weist Sensoren 8, 22, die z.B. als Kameras 8 ausgebildet sind, und Aktoren 18, 24, z. B. einer Drehplatte, die es ermöglicht, den Einschlagwinkel des zu vermessenden Fahrzeugrad 4 zu erfassen und/oder einzustellen, auf. Der Messwertaufnehmer 6 ist zusätzlich mit wenigstens einer Beleuchtungseinrichtung 16 ausgebildet, um das Sichtfeld der Kameras 8 ausreichend zu beleuchten.

Die Sensoren 8 und Aktoren 18 und die Beleuchtungseinrichtung 16 können direkt mit einer im Messwertaufnehmer 6 vorgesehenen Sensor-Integrationsplatine 26 verbunden sein. Alternativ kann zwischen den Sensoren 22 und Aktoren 24 und der Sensor-Integrationsplatine 26 eine "intelligente" Sensor-Integrationsschaltung 20 vorgesehen sein, die autonom Steuer- und Auswertaufgaben für die mit ihr verbundenen Sensoren 22 und Aktoren 24 übernimmt und auf diese Weise die Sensor-Integrationsplatine 26 von diesen Aufgaben entlastet.

Die Sensor-Integrationsplatine 26 steuert die Aktoren 18, 24 und die Beleuchtungseinrichtung geeignet an, um die gewünschte Messung zu ermöglichen. Die Sensor-Integrationsplatine 26 nimmt die von den Sensoren 18, 22 gelieferten Daten in Echtzeit auf, speichert die Daten ggf. in einem internen, schnellen Speicher 35 und liefert die Daten über eine lokale Hochgeschwindigkeitsschnittstelle 28, z. B. einen PCIe-Bus, an eine in dem Messwertaufnehmer 6 vorgesehene Rechnerplatine 30, die zum Beispiel eine Hauptplatine (Mainboard) eines handelsüblichen Personal Computers ist.

Auf der in dem Messwertaufnehmer 6 vorgesehenen Rechnerplatine 30 läuft ein Programm, das den Ablauf der Messung steuert und die von den Sensoren 18, 22 gelieferten Daten auswertet und aufbereitet.

Die Ergebnisse der Datenauswertung und -aufbereitung werden dann über die Datenleitung 9 an den Zentralrechner 10 weitergegeben. Der Zentralrechner 10 sammelt die Daten aller Messwertaufnehmer 6 und führt auf der Basis dieser Daten die Datenauswertung für das gesamte Fahrzeug 2 durch.

Dadurch, dass ein wesentlicher Teil der Datenauswertung und -aufbereitung dezentral in den Messwertaufnehmern 6 vorgenommen wird, wird die im Zentralrechner 10 benötigte Rechenleistung ebenso reduziert wie die über die Datenleitungen 9 zu übertragende Datenmenge.

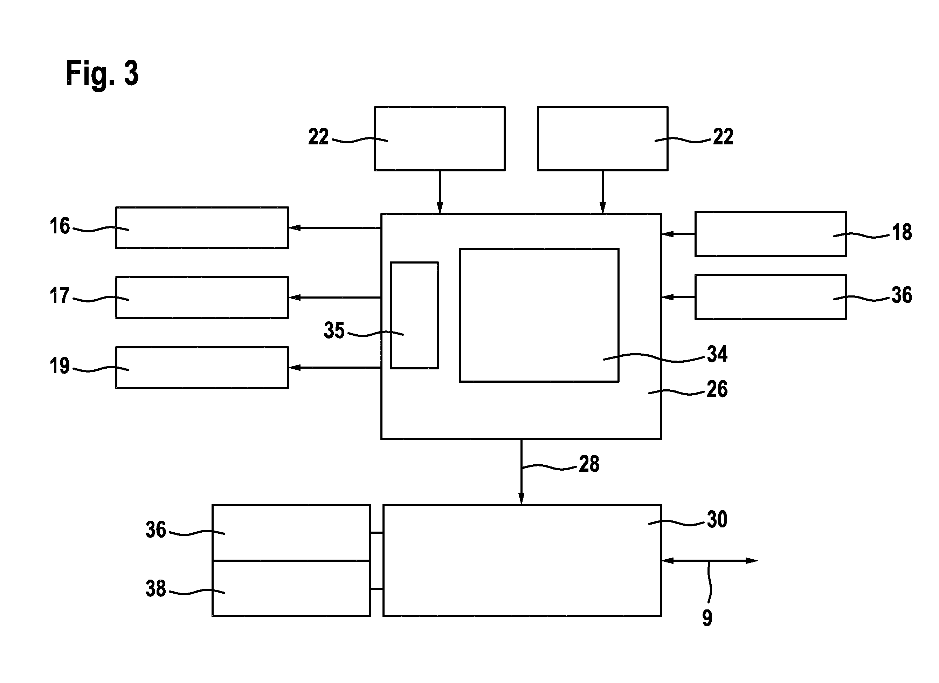

Figur 3 zeigt eine schematische Ansicht des funktionalen Aufbaus eines erfindungsgemäßen Messwertaufnehmers 6.

Ein wesentliches Bauteil eines erfindungsgemäßen Messwertaufnehmers 6 gemäß dem in den Figuren gezeigten Ausführungsbeispiel ist eine Sensor-Integrationsplatine 26, die z.B. als FPGA-Platine ("Field Programmable Gate Array"-Platine) mit einem "Field Programmable Gate Array" (FPGA) 34 ausgebildet ist.

Über Schnittstellen 32 ist die Sensor-Integrationsplatine 26 mit verschiedenen Sensoren 8, 22, die bspw. als Kameras 8 oder Winkelsensoren 22 ausgebildet sind, Aktoren 18, 24, wie z. B. einer Drehplatte 18 oder einem Referenzsystem 24, und Beleuchtungs- bzw. Anzeigevorrichtungen, wie z. B. einem Lichtprojektor 16, einem LED-Blitz 17 oder einer Status-LED 19 verbunden, um Daten von den Sensoren 22 aufzunehmen und die Aktoren 18, 36 und Beleuchtungs- bzw. Anzeigevorrichtungen 16, 17, 19 geeignet anzusteuern.

Auf der Sensor-Integrationsplatine 26 ist auch ein schneller lokaler Speicher 35 vorgesehen, um die von den Sensoren 8, 22 gelieferten Daten in Echtzeit zu speichern.

Die Sensor-Integrationsplatine 26 ist über einen lokalen HochgeschwindigkeitsBus 28 mit einer lokalen, im jeweiligen Messwertaufnehmer 6 angeordneten Rechnerplatine 30 verbunden. Die Rechnerplatine 30 wird von einem Netzteil 36 mit Energie versorgt und weist einen lokalen Speicher 38 auf. Die Rechnerplatine 30 ist über eine Standard-Kommunikationsschnittstelle, wie z. B. Ethernet, WLAN, USB oder Bluetooth mit dem Zentralrechner 10 verbunden, wie er in den Figuren 1 und 2 gezeigt ist.

## Patentansprüche

1. Messwertaufnehmer (6) zur Vermessung eines Fahrzeugs (2) mit wenigstens einem Rad (4),
**dadurch gekennzeichnet, dass** der Messwertaufnehmer (6) ausgebildet ist, im Betrieb
wenigstens zwei verschiedene Daten-Erfassungseinrichtungen (8, 22), die ausgebildet sind, unterschiedliche Parameter eines einem Messwertaufnehmer (6) zugeordneten Rades (4) aufzunehmen bzw. zu messen und daraus Rohdaten zu erzeugen, anzusteuern und von den Daten-Erfassungseinrichtungen (8, 22) erzeugte Rohdaten zu empfangen;
aus den von wenigstens zwei Daten-Erfassungseinrichtungen (8, 22) empfangenen Rohdaten Ausgangsdaten zu erzeugen; und
die Ausgangsdaten an einen übergeordneten Zentralrechner (10) auszugeben.

2. Messwertaufnehmer (6) nach Anspruch 1, wobei der Messwertaufnehmer (6) wenigstens eine Schnittstelle (32) zur Verbindung mit wenigstens einer Daten-Erfassungseinrichtung (8, 22) aufweist und die Schnittstelle (32) insbesondere als Hochgeschwindigkeitsschnittstelle bzw. Hochgeschwindigkeitsbus ausgebildet ist.

3. Messwertaufnehmer (6) nach einem der vorangehenden Ansprüche, wobei wenigstens eine Daten-Erfassungseinrichtung (8, 22) einen Winkelsensor und/oder eine Kamera umfasst.

4. Messwertaufnehmer (6) nach einem der vorangehenden Ansprüche, wobei der Messwertaufnehmer (6) Komponenten (30, 36, 38), insbesondere die Hauptplatine (30), eines handelsüblichen Personal Computers und/oder einen lokalen Zwischenspeicher (35) zur Speicherung der empfangenen Rohdaten und/oder der Ausgangsdaten aufweist.

5. Messwertaufnehmer (6) nach einem der vorangehenden Ansprüche, wobei die Rohdaten Bilddaten enthalten und der Messwertaufnehmer (6) ausgebildet ist, die Bilddaten mit einer Frequenz von bis zu 25 Bildern pro Sekunde zu verarbeiten.

6. Messplatz (1) zur Fahrzeugvermessung mit
wenigstens einer Daten-Erfassungseinrichtung (8, 22), die zum Erfassen von Daten des zu vermessenden Fahrzeugs (2) ausgebildet ist,
einem Zentralrechner (10), der zur Auswertung der Daten und Ausgabe der Messergebnisse ausgebildet ist,
**dadurch gekennzeichnet, dass** der Messplatz (1) wenigstens einen Messwertaufnehmer (6) nach einem der vorangehenden Ansprüche aufweist.

7. Messplatz (1) zur Fahrzeugvermessung nach Anspruch 6, wobei der Messwertaufnehmer (6) wenigstens eine Schnittstelle (32) aufweist, die ausgebildet ist, um den Messwertaufnehmer (6) derart mit wenigstens einem Aktuator (16, 24) des Messplatzes (1) zu verbinden, dass der Aktuator (16, 24) von dem Messwertaufnehmer (6) ansteuerbar ist.

8. Messplatz (1) zur Fahrzeugvermessung nach Anspruch 6 oder 7, wobei für jedes Rad (4) des zu vermessenden Fahrzeugs (2) ein eigener Messwertaufnehmer (6) vorgesehen ist.

9. Verfahren zur Vermessung eines Fahrzeugs (2), das die Schritte einschließt:
Ansteuern von wenigstens zwei verschiedenen Daten-Erfassungseinrichtungen (8, 22), die ausgebildet sind, unterschiedliche Parameter eines einem Messwertaufnehmer (6) zugeordneten Rades (4) aufzunehmen bzw. zu messen und daraus Rohdaten zu erzeugen, mit dem Messwertaufnehmer (6);
Sammeln und Verarbeiten der von den Daten-Erfassungseinrichtungen (8, 22) bereitgestellten Rohdaten des wenigstens eines Rades (4) in dem dem jeweiligen Rad (4) zugeordneten Messwertaufnehmer (6); und
Übertragen der verarbeiteten Daten an einen übergeordneten Zentralrechner (10).

10. Verfahren nach Anspruch 9, wobei das Verarbeiten der Daten das Kombinieren der Rohdaten von wenigstens zwei Daten-Erfassungseinrichtungen (8, 22) umfasst.
